# EUROPÄISCHE PATENTSCHRIFT

(11) **EP 3 119 622 B1**
(45) Veröffentlichungstag und Bekanntmachung des Hinweises auf die Patenterteilung: **25.10.2023**
(21) Anmeldenummer: 15709201.6
(22) Anmeldetag: 12.03.2015
(51) Int. Cl.: B60H 1/00, B60H 1/32, F25B 25/00

(54) **HEIZKÜHLMODUL**
HEATING/COOLING MODULE
MODULE DE CHAUFFAGE ET DE REFROIDISSEMENT

(30) Priorität: 17.03.2014 DE 102014204936
(43) Veröffentlichungstag der Anmeldung: 25.01.2017
(73) Patentinhaber: Mahle International GmbH, 70376 Stuttgart (DE)
(72) Erfinder: DÜRR, Gottfried, 71640 Ludwigsburg (DE); HOFMANN, Herbert, 70806 Kornwestheim (DE); HAUG, Joachim Michael, 74395 Mundelsheim (DE)
(74) Vertreter: Grauel, Andreas
(86) Internationale Anmeldenummer: PCT/EP2015/055152
(87) Internationale Veröffentlichungsnummer: WO 2015/140034

(56) Entgegenhaltungen:
- EP-A1- 1 990 221
- DE-A1-102010 048 015
- JP-A- 2013 231 574
- US-A1- 2012 210 746
- US-A1- 2012 222 846

## Beschreibung

### Technisches Gebiet

Die Erfindung betrifft ein Heizkühlmodul in Stapelscheibenbauweise, aufgebaut durch eine Aufeinanderstapelung mehrerer einzelner Scheibenelemente, mit einem Kondensatorbereich, mit einem Verdampferbereich und mit zumindest einem Fluidverteilungsbereich, wobei der Kondensatorbereich eine erste Strömungsstrecke aufweist, welche von einem Kältemittel durchströmbar ist, und eine zweite Strömungsstrecke aufweist, welche von einem Kühlmittel durchströmbar ist, und der Verdampferbereich eine dritte Strömungsstrecke aufweist, welche von einem Kältemittel durchströmbar ist, und eine vierte Strömungsstrecke aufweist, welche von einem Kühlmittel durchströmbar ist, wobei die Strömungsstrecken durch eine Mehrzahl von Strömungskanälen gebildet sind, welche zwischen den einzelnen Scheibenelementen, welche das Heizkühlmodul bilden, ausgebildet sind, wobei ein erster Fluidzulauf und ein erster Fluidablauf vorgesehen ist, über welche der Verdampferbereich mit einem Kühlmittel durchströmbar ist und ein zweiter Zulauf und ein zweiter Ablauf vorgesehen ist, über welche der Kondensatorbereich mit einem Kühlmittel durchströmbar ist und ein dritter Zulauf und ein dritter Ablauf vorgesehen ist, über welche das Heizkühlmodul mit einem Kältemittel durchströmbar ist.

### Stand der Technik

In Kraftfahrzeugen werden regelmäßig Verdampfer verwendet, um den Innenraum zu kühlen. Weiterhin werden Kondensatoren verwendet, welche die Wärme an die Außenluft abgeben. Regelmäßig werden den Kältemittelkreisläufen weitere Komponenten hinzugefügt, um weitere Funktionalitäten zu realisieren. Dieses geschieht beispielsweise, um die Heizung des Innenraumes zu ermöglichen oder zusätzlich verbaute Batterien zu kühlen. Dies ist insbesondere bei elektrisch angetriebenen Fahrzeugen zunehmend der Fall, um die zum Antrieb benötigten Batterien in einem optimalen Temperaturfenster zu betreiben.

Durch diese weiteren Komponenten werden die Kältemittelkreisläufe sehr komplex und fehleranfällig. Weiterhin besteht die Gefahr einer ungewollten Kältemittelverlagerung in stillliegende Bereiche des Kältemittelkreislaufes. Mit stillliegenden Bereichen sind beispielsweise zeitweise nicht durchströmte Bereiche gemeint. Zur Steuerung und Regelung dieser Kreisläufe sind Schaltventile notwendig, die einen erhöhten Einbauaufwand mit sich bringen und weiterhin ebenfalls die Fehleranfälligkeit erhöhen.

In einer alternativen Ausführung kann der Kältemittelkreislauf mit einem warmen und einem kalten Wasser-Glysantin-Kreislauf verbunden werden. Dabei kann die Wärme beliebig über Luft-Wasser-Wärmetauscher ausgekoppelt werden. Zur Bereitstellung des wärmeren und des kälteren Wassers werden mindestens ein sogenannter Chiller und ein Kondensator benötigt. Ein Chiller dient hierbei insbesondere der Abkühlung eines den Chiller umströmenden Mediums. Im einfachsten Fall kann ein auf diese Weise erzeugter Kreislauf also aus einem Chiller, einem Kondensator, einem thermostatischen Expansionsventil (TXV) und einem Verdichter bestehen. Zusätzlich kann ein Sammler zum Ausgleich von Fluidschwankungen vorgesehen sein. Auch können ein wasserseitiger Unterkühler oder ein innerer Wärmetauscher vorgesehen sein, um eine Verbesserung des Wirkungsgrades herbeizuführen.

Die US 2012/210746 A1 und die US 2012/ 222846 A1 offenbaren einen Verdampfer in Stapelscheibenanordnung und einen Kondensator in Stapelscheibenanordnung, die über verschiedene Rohrleitungen mit Fluidkreisläufen verbunden und zueinander beabstandet angeordnet sind.

Die EP 1 990 221 A1 offenbart ein Klimaanlagensystem, bei dem der Kondensator, der Verdampfer und der innere Wärmeübertrager als integrierte Blockeinheit ausgebildet sind.

Die US 2012/060550 A1 offenbart einen Wärmeübertrager mit einem Verdampferabschnitt und mit einem Kondensatorabschnitt, bei dem der Kondensatorabschnitt und der Verdampferabschnitt in Stapelscheibenbauweise ausgebildet sind und in Stapelrichtung der aufgestapelten Scheiben nebeneinander angeordnet sind.

Die JP 2013 231574 A offenbart einen Wasserkühler in Stapelscheibenanordnung und einen Kondensator in Stapelscheibenanordnung, die beabstandet zueinander angeordnet sind und ein Expansionsventil dazwischen angeordnet ist.

Nachteilig an den im Stand der Technik bekannten Lösungen ist, dass die Vielzahl von verwendeten Elementen einen hohen Bauraumbedarf verursacht. Weiterhin muss eine Vielzahl von Verbindungsleitungen vorgesehen werden, um die einzelnen Elemente miteinander zu verbinden. Diese Verbindungen erhöhen den Montageaufwand und stellen eine zusätzliche Fehlerquelle dar. Weiterhin ist es nachteilig, dass bisher bekannte Lösungen, welche durch eine Kombination mehrerer Wärmeübertragerelemente in einer Baueinheit gebildet sind, keine inneren Wärmeübertrager oder Chiller integriert sind.

### Darstellung der Erfindung, Aufgabe, Lösuna, Vorteile

Daher ist es die Aufgabe der vorliegenden Erfindung ein Heizkühlmodul bereitzustellen, welches sich durch eine kompakte Bauform auszeichnet und möglichst wenige Anschlüsse für die Versorgung der einzelnen im Heizkühlmodul enthaltenen Komponenten aufweist. Weiterhin soll das Heizkühlmodul besonders einfach herstellbar sein.

Die Aufgabe hinsichtlich des Heizkühlmoduls wird durch ein Heizkühlmodul mit den Merkmalen des Anspruchs 1 gelöst.

Ein Ausführungsbeispiel der Erfindung betrifft ein Heizkühlmodul in Stapelscheibenbauweise aufgebaut durch eine Aufeinanderstapelung mehrerer einzelner Scheibenelemente, mit einem Kondensatorbereich, mit einem Verdampferbereich und mit zumindest einem Fluidverteilungsbereich, wobei der Kondensatorbereich eine erste Strömungsstrecke aufweist, welche von einem Kältemittel durchströmbar ist, und eine zweite Strömungsstrecke aufweist, welche von einem Kühlmittel durchströmbar ist, und der Verdampferbereich eine dritte Strömungsstrecke aufweist, welche von einem Kältemittel durchströmbar ist, und eine vierte Strömungsstrecke aufweist, welche von einem Kühlmittel durchströmbar ist, wobei die Strömungsstrecken durch eine Mehrzahl von Strömungskanälen gebildet sind, welche zwischen den einzelnen Scheibenelementen, welche das Heizkühlmodul bilden, ausgebildet sind, wobei ein erster Fluidzulauf und ein erster Fluidablauf vorgesehen ist, über welche der Kondensatorbereich mit einem Kühlmittel durchströmbar ist und ein zweiter Zulauf und ein zweiter Ablauf vorgesehen ist, über welche der Verdampferbereich mit einem Kühlmittel durchströmbar ist und ein dritter Zulauf und ein dritter Ablauf vorgesehen ist, über welche das Heizkühlmodul mit einem Kältemittel durchströmbar ist, wobei der zumindest eine Fluidverteilungsbereich zwischen dem Kondensatorbereich und dem Verdampferbereich angeordnet ist und ein thermostatisches Expansionsventil aufweist, welches von Kältemittel durchströmbar ist, wobei der Verdampferbereich, der Kondensatorbereich und der erste Fluidverteilungsbereich in einer Richtung quer zur Stapelrichtung des Heizkühlmoduls nebeneinander angeordnet sind.

Ein Fluidverteilungsbereich ist insbesondere vorteilhaft, um die Fluidzuführung und die Fluidabführung in das Heizkühlmodul und aus dem Heizkühlmodul heraus zu realisieren. Der Fluidverteilungsbereich kann dabei vorzugsweise auch Teil der Strömungsstrecken des Kältemittels und/oder des Kühlmittels sein. Durch den Fluidverteilungsbereich aber auch durch den Verdampferbereich und/oder den Kondensatorbereich können auch Hülsen oder Rohrabschnitte geführt sein, welche eine Fluidleitung durch den jeweiligen Bereich hindurch ermöglichen. In vorteilhaften Ausgestaltungen kann auch eine Mehrzahl von Fluidverteilungsbereichen vorgesehen sein.

Besonders vorteilhaft ist es weiterhin, wenn der Kondensatorbereich und der Verdampferbereich jeweils mit einem eigenen Kühlmittelstrom durchströmbar sind. Auf diese Weise können durch das Heizkühlmodul, welches eine Baueinheit bildet, zwei Wasserkreisläufe mit unterschiedlichen Temperaturniveaus versorgt werden. Insbesondere ein warmer Wasserkreislauf und ein kalter Wasserkreislauf.

Auch ist es vorteilhaft, wenn ein zweiter Fluidverteilungsbereich vorgesehen ist, welcher auf der vom ersten Fluidverteilungsbereich abgewandten Seite des Verdampferbereichs oder des Kondensatorbereichs angeordnet ist.

Ein zweiter Fluidverteilungsbereich ist besonders vorteilhaft, um eine größere Flexibilität hinsichtlich der Anordnung der Fluidzuläufe und der Fluidabläufe zu ermöglichen. In alternativen Ausgestaltungen können auch weitere Fluidverteilungsbereiche vorgesehen sein. Durch die Lage der Fluidzuläufe und der Fluidabläufe kann auch insbesondere die Durchströmung des Heizkühlmoduls beeinflusst werden.

Ein bevorzugtes Ausführungsbeispiel ist dadurch gekennzeichnet, dass einzelne Strömungskanäle zwischen den Scheibenelementen durch Öffnungen mit Durchzügen oder Öffnungen ohne Durchzüge in den Scheibenelementen miteinander in Fluidkommunikation stehen.

Durch Öffnungen in den Schiebenelementen kann eine Fluidströmung nach oben und/oder nach unten zu den jeweils benachbarten Strömungskanälen erreicht werden. Durch Öffnungen mit Durchzügen kann erreicht werden, dass einzelne Strömungskanäle übersprungen werden.

Auch ist es zu bevorzugen, wenn die zwischen den Scheibenelementen ausgebildeten Strömungskanäle durch Trennelemente in mehrere Bereiche unterteilt sind, wobei die einzelnen Bereiche jeweils einem Wärmeübertrager zugeordnet sind.

Durch eine Unterteilung der einzelnen Strömungskanäle in Teilbereiche können die einzelnen Bereiche, welche die einzelnen Wärmeübertrager bilden, fluidtechnisch voneinander getrennt werden. Hierzu können beispielsweise Trennwände vorgesehen werden. Die einzelnen Bereiche können sowohl in Richtung der Stapelrichtung unterteilt sein als auch in einer Richtung quer zur Stapelrichtung des Scheibenstapels.

Darüber hinaus ist es vorteilhaft, wenn die einzelnen Bereiche über Flanschelemente miteinander in Fluidkommunikation stehen. Es können Flanschelemente vorgesehen sein, welche eine Fluidweiterleitung zwischen den einzelnen Bereichen ermöglichen. Dadurch kann ein Fluid durch mehrere Bereiche innerhalb des Heizkühlmoduls geführt werden.

Auch ist es vorteilhaft, wenn die Zuläufe und/oder die Abläufe in die Flanschelemente integriert sind. Dies ist insbesondere vorteilhaft, um eine kompakte Bauform des Heizkühlmoduls zu erreichen. Gleichzeitig kann durch eine geschickte Konstruktion der Flanschelemente erreicht werden, dass das Fluid beim Einströmen über einen Fluidzulauf gleich auf mehrere Bereiche aufgeteilt wird oder beim Ausströmen über einen Fluidablauf aus mehreren Bereichen gleichzeitig abgeleitet wird.

Auch ist es zweckmäßig, wenn die Zuläufe und/oder die Abläufe jeweils an einem oder mehreren Scheibenelementen oder zwischen zwei benachbarten Scheibenelementen integriert sind und mit zumindest einem Strömungskanal in Fluidkommunikation stehen, wobei die jeweiligen Scheibenelemente benachbart zu den Scheibenelementen angeordnet sind, welche den Scheibenstapel nach oben und unten hin abschließen. Es ist besonders vorteilhaft, wenn die Fluidzuläufe und die Fluidabläufe direkt in die jeweiligen Strömungskanäle münden, welche zwischen zwei zueinander benachbarten Scheibenelementen ausgebildet sind. Auf diese Weise findet eine direkte Zu- oder Ableitung in die oder aus den Strömungskanälen statt. Dies ist ebenfalls einer kompakten Bauform des Heizkühlmoduls zuträglich.

In einer alternativen Ausführung ist es vorteilhaft, wenn alle Zuläufe und Abläufe an einer gemeinsamen Außenfläche des Heizkühlmoduls angeordnet sind. Eine Anordnung aller Zu- und Abläufe an einer gemeinsamen Außenfläche des Heizkühlmoduls ist besonders vorteilhaft, um eine kompakte Bauform des Heizkühlmoduls zu erreichen. Auch ergibt sich dadurch eine vorteilhafte Bauform für die Montage des Heizkühlmoduls in einen zur Verfügung stehenden Bauraum, da nur einseitig Zu- und Abführungsleitungen vorgesehen werden müssen. Dies reduziert den benötigten Bauraum und ist zudem vorteilhaft für Wartungs- und Reparaturarbeiten.

Darüber hinaus ist es vorteilhaft, wenn das Heizkühlmodul zusätzlich zu dem Kondensatorbereich, dem Verdampferbereich und dem Fluidverteilungsbereich einen Sammler und/oder einen inneren Wärmeübertrager und/oder einen Unterkühler aufweist.

Ein Sammler ist vorteilhaft, um eine Fluidbevorratung zu schaffen, welche benötigt wird um Volumenschwankungen insbesondere innerhalb des Kältemittelkreislaufes ausgleichen zu können. Durch einen inneren Wärmeübertrager kann vorteilhaft ein weiterer Wärmeübertrag innerhalb des Heizkühlmoduls erzeugt werden. Dies geschieht bevorzugt zwischen Kältemittel, welches aus dem Verdampferbereich ausgeströmt ist, und Kältemittel, welches aus dem Kondensatorbereich ausgeströmt ist. Durch diesen zusätzlichen Wärmeübertrag lässt sich die Effizienz des Heizkühlmoduls weiter erhöhen. Ein Unterkühler ist weiterhin vorteilhaft, um einen weiteren Wärmeübertrag zwischen dem Kältemittel und einem Kühlmittel zu erreichen. Dies erhöht weiterhin die Effizienz des Heizkühlmoduls.

Weiterhin ist es vorteilhaft, wenn ein Filter in eine der Strömungsstrecken des Kältemittels integrierbar ist, wobei der Filter in Strömungsrichtung dem thermostatischen Expansionsventil vorgelagert ist. Ein Filter ist insbesondere vorteilhaft, wenn er in Strömungsrichtung dem Expansionsventil vorgelagert ist, um Partikel, welche das Expansionsventil beschädigen könnten, aus dem Fluidstrom zu filtern. Der Filter ist vorteilhafterweise in das Heizkühlmodul einsteckbar und mit diesem wieder lösbar verbindbar. Dadurch kann eine einfache Wartung des Filters ermöglicht werden.

Auch ist es zweckmäßig, wenn ein Sammler außerhalb des Heizkühlmoduls an oder benachbart zu einer der Außenflächen angeordnet ist, wobei der Sammler mit einer der Strömungsstrecken des Kältemittels in Fluidkommunikation steht. Der Sammler kann vorteilhafterweise auch außerhalb des Scheibenstapels angeordnet sein. Bevorzugt ist er dann an einer der Außenflächen des Heizkühlmoduls angeordnet. Dies ist insbesondere vorteilhaft, wenn ein Sammlervolumen benötigt wird, welches sich nicht mehr ohne grundlegende konstruktive Änderungen in das Heizkühlmodul integrieren lässt.

Weiterhin ist es zu bevorzugen, wenn entlang einer der Strömungsstrecken des Kältemittels oder einer der Strömungsstrecken des Kühlmittels eine Druckverminderungsstelle in Form einer Querschnittsverjüngung vorgesehen ist. Eine Druckverminderungsstelle ist insbesondere vorteilhaft, wenn ein Niederdruckbereich erzeugt werden soll. Dies geschieht vorteilhafterweise in Strömungsrichtung vor dem Verdampfer. Dies ermöglicht es auch einen Niederdrucksammler zu verwenden. Die Querschnittsverjüngung kann beispielsweise durch eine Orifice oder ein Rohr erzeugt werden.

Ein weiteres Ausführungsbeispiel ist dadurch gekennzeichnet, dass das Kühlmittel und das Kältemittel im Gleichstrom oder im Gegenstrom zueinander durch die einzelnen Wärmeübertrager, welche durch die Bereiche gebildet sind, strömbar sind. Durch das Strömen im Gleichstrom und im Gegenstrom kann der Wärmeübertrag zwischen den Medien beeinflusst werden. Je nach der Fluidführung innerhalb des Heizkühlmoduls können sowohl Abschnitte erzeugt werden, welche im Gegenstrom durchströmt werden, als auch Abschnitte, welche im Gleichstrom durchströmt werden.

Auch ist es zu bevorzugen, wenn zusätzlich zu dem Verdampferbereich, dem Kondensatorbereich und dem ersten Fluidverteilungsbereich auch sofern vorhanden ein weiterer Fluidverteilungsbereich und/oder der Unterkühler und/oder der Sammler und/oder der innere Wärmeübertrager in einer Richtung quer zur Stapelrichtung des Heizkühlmoduls nebeneinander angeordnet sind. Dies ist besonders vorteilhaft, um einen einfachen Aufbau des Heizkühlmoduls zu realisieren.

Erfindungsgemäß ist es vorteilhaft, wenn sämtliche Bauteile außer ein evtl. vorliegendes TXV-Expansionsventil und evtl. ein vorliegender Filter in einer Komplettlötung herstellbar sind. Dies kann bedeuten, dass die angesprochenen Bauteile in einem Lötvorgang komplett gelötet werden. Bei Verwendung eines so genannten Orifice-Expansionsventils könnte dieses sogar mitgelötet werden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig.1: eine schematische Ansicht eines Heizkühlmoduls, wobei das Heizkühlmodul in einer Stapelscheibenbauweise aufgebaut ist und das Heizkühlmodul weiterhin in mehrere Bereiche unterteilt ist, welche unterschiedliche Wärmeübertrager ausbilden, und
- Fig. 2 bis 18: jeweils eine alternative Ausführungsform eines Heizkühlmoduls gemäß Fig. 1, wobei die einzelnen Bereiche in unterschiedlichen Folgen aneinandergereiht sind und die Durchströmung der einzelnen Bereiche durch die Lage der Fluidzuläufe und der Fluidabläufe variiert ist.

### Bevorzugte Ausführung der Erfindung

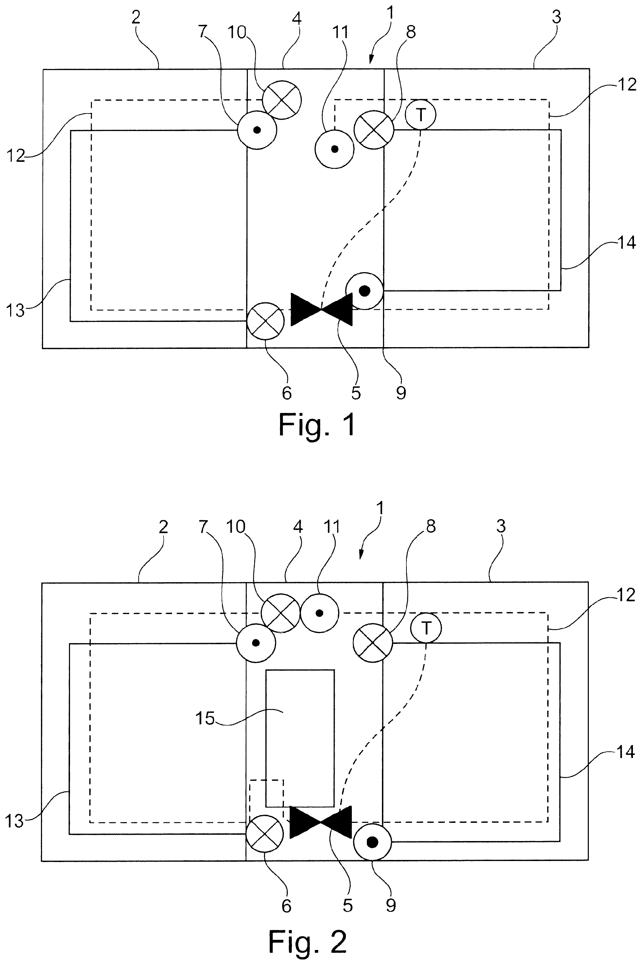

Die Fig. 1 sowie die weiteren Fig. 2 bis 18 zeigen jeweils eine schematische Ansicht des Heizkühlmoduls 1. Alle gezeigten Heizkühlmodule 1 weisen jeweils einen ersten Fluidzulauf 7 und einen ersten Fluidablauf 6 auf, durch welche ein Kühlmittel in das Heizkühlmodul 1 einströmen und aus diesem ausströmen kann. Dabei wird insbesondere der Kondensatorbereich 2 des Heizkühlmoduls 1 durchströmt. Weiterhin weisen alle Heizkühlmodule 1 einen zweiten Fluidzulauf 9 und einen zweiten Fluidablauf 8 auf, durch welche ebenfalls ein Kühlmittel einströmen und abströmen kann, wobei hauptsächlich der Verdampferbereich 3 des Heizkühlmoduls 1 von diesem Kühlmittel durchströmt wird. Weiterhin weisen alle Heizkühlmodule 1 einen dritten Fluidzulauf 11 und einen dritten Fluidablauf 10 auf, durch welchen ein Kältemittel in das Heizkühlmodul 1 einströmen kann und aus diesem ausströmen kann. Das Kältemittel durchströmt dabei bevorzugt alle Bereiche 2, 3 des Heizkühlmoduls 1.

Die Strömungsstrecke 13 bezeichnet den Strömungsweg des Kühlmittels im Kondensatorbereich 2. Die Strömungsstrecke 14 bezeichnet die Strömung des Kühlmittels innerhalb des Verdampferbereichs 3. Weiterhin bezeichnet die Strömungsstrecke 12 den Strömungsweg des Kältemittels zwischen dem dritten Fluidzulauf 10 und dem dritten Fluidablauf 11. Die Strömungsstrecke 12 verläuft dabei regelmäßig sowohl durch den Verdampferbereich 3, den Kondensatorbereich 2 als auch den Fluidverteilungsbereich 4.

Alle Figuren 1 bis 18 weisen jeweils ein mit dem Bezugszeichen 5 bezeichnetes Expansionsventil auf. Dieses ist jeweils in die Strömungsstrecke 12 des Kältemittels integriert und ist jeweils im Fluidverteilungsbereich 4 angeordnet. Dieses Expansionsventil 5 entspricht einem regulären Expansionsventil, wie es in Kältemittelkreisläufen in anderen Lösungen im Stand der Technik verwendet wird. Das Expansionsventil 5 kann dabei bevorzugt nachträglich in das Heizkühlmodul 1 eingesetzt werden und mit dem Heizkühlmodul 1 verschraubt werden oder einfach eingesteckt werden.

Das Heizkühlmodul 1 ist in einer Stapelscheibenbauweise gebildet und somit durch eine Aufeinanderstapelung mehrerer einzelner Scheibenelemente aufgebaut. Der Scheibenstapel wird nach oben beziehungsweise nach unten hin jeweils von einer Abschlussplatte abgeschlossen. Zwischen den einzelnen Scheibenelementen ergibt sich eine Mehrzahl von Strömungskanälen, welche über Öffnungen in den einzelnen Scheibenelementen miteinander derart in Fluidkommunikation stehen, dass mehrere Strömungsstrecken 12, 13 und 14 innerhalb des Heizkühlmoduls 1 ausgebildet werden. Hierzu können die einzelnen Scheibenelemente Öffnungen aufweisen, welche beispielsweise Durchzüge aufweisen können, wodurch es möglich wird, eine Fluidströmung zwischen den Scheibenelementen gezielt zu steuern. Weiterhin können in den Strömungskanälen zwischen den Scheibenelementen Turbulenzeinlagen vorgesehen sein, um weiterhin die Strömung in den einzelnen Strömungskanälen zu beeinflussen und den Wärmeübertrag zu erhöhen.

Die einzelnen Strömungskanäle können wahlweise mit einem Kühlmittel oder einem Kältemittel durchströmt werden und können dabei derart durchströmt werden, dass das Kühlmittel mit dem Kältemittel in benachbarten Abschnitten im Gegenstrom zueinander strömt oder im Gleichstrom zueinander.

Im Ausführungsbeispiel der Fig. 1 ist im linken Bereich ein Kondensatorbereich 2 angeordnet und im rechten Bereich ein Verdampferbereich 3. Die beiden Bereiche 2, 3 sind durch einen Fluidverteilungsbereich 4 getrennt. Dieser Fluidverteilungsbereich 4 weist die Fluidzuläufe und Fluidabläufe 6 bis 11 auf, wodurch Kühlmittel und Kältemittel in das Heizkühlmodul 1 einströmen und aus diesem ausströmen können.

Im Ausführungsbeispiel der Fig. 1 ist der Kondensatorbereich 2 einfach in einer U-förmigen Form durchströmt. Das heißt, es findet keine weitere Umlenkung innerhalb des Kondensatorbereichs 2 statt. Ebenso wird der Verdampferbereich 3 in einer U-förmigen Schleife durchströmt, ohne weitere Umlenkungen vorzusehen. Das Kältemittel strömt über den Fluidverteilungsbereich 4 und durchströmt U-förmig den rechts gelegenen Verdampferbereich 3. Das Expansionsventil 5 ist dem Verdampferbereich 3 nachgeordnet innerhalb des Fluidverteilungsbereichs 4 angeordnet und ist weiterhin in Strömungsrichtung des Kältemittels vor dem Kondensatorbereich 2 angeordnet. Der Kondensatorbereich 2 wird ebenfalls U-förmig mit dem Kältemittel durchströmt. Danach wird das Kältemittel über den dritten Fluidablauf 11 aus dem Heizkühlmodul 1 ausgeführt.

Die in den Fig. 1, 2 und 4 bis 18 gezeigten Heizkühlmodule 1 weisen jeweils Fluidzuläufe und Fluidabläufe 6 bis 11 auf, welche seitlich an dem Heizkühlmodul 1 angebracht sind. Diese können bevorzugt an einer gemeinsamen Außenfläche angeordnet sein. In sonst bekannten Lösungen im Stand der Technik sind die Fluidzuläufe und -abläufe im Regelfall an der oberen beziehungsweise der unteren Abschlussplatte des Scheibenstapels angeordnet, so dass die Fluidzuführung von oben oder von unten erfolgt. Dies ist insbesondere nachteilig, da die Zu- und Ableitungen für das Heizkühlmodul an zwei unterschiedlichen Außenflächen des Heizkühlmoduls herangeführt werden müssen. Demgegenüber weisen die Fig. 1, 2 und 4 bis 18 eine vorteilhafte Gestaltung auf, da die entsprechenden Zu- und Ableitungen jeweils nur an eine Außenfläche des Heizkühlmoduls 1 herangeführt werden müssen.

Die Fig. 2 zeigt eine alternative Ausgestaltung des Heizkühlmoduls 1, wobei im Fluidverteilungsbereich 4 zusätzlich ein sogenannter Sammler 15 vorgesehen ist, welcher in Strömungsrichtung dem Expansionsventil 5 vorgelagert ist und dem Kondensatorbereich 2 nachgelagert ist. Die restliche Durchströmung des Heizkühlmoduls der Fig. 2 entspricht dem Ausführungsbeispiel der Fig. 1. Der Sammler 15 dient insbesondere zur Bevorratung von Kältemittel und kann dadurch einen Volumenausgleich bewirken. Weiterhin können im Sammler 15 Mittel zur Trocknung und/oder zur Filterung des Kältemittels vorgesehen sein.

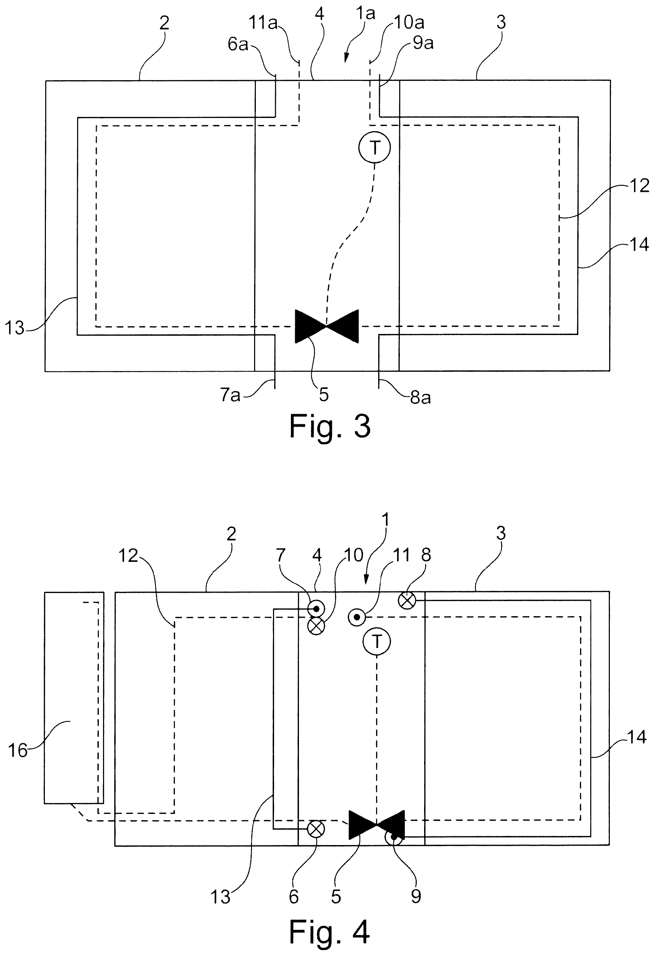

Die Fig. 3 zeigt ein Heizkühlmodul 1a mit Anschlüssen nach oben beziehungsweise nach unten, wie sie im Stand der Technik bekannt sind. Der übrige Aufbau des Heizkühlmoduls 1a entspricht dem des Heizkühlmoduls 1 der Fig. 1. Lediglich die Anordnung der Anschlüsse ist aus dem Stand der Technik bekannt. Die Kombination des Kondensatorbereichs 2 und des Verdampferbereichs 3 mit einem Fluidverteilungsbereich 4 in einem gemeinsamen Bauelement entspricht dem Erfindungsgegenstand, wie er bereits in der Fig. 1 gezeigt wurde. Die Fluidzuläufe und Fluidabläufe 6a bis 11a sind an der Ober- beziehungsweise der Unterseite des Kühlmoduls 1a angeordnet. Darüber hinaus gibt es keine Unterschiede zum Ausführungsbeispiel der Fig. 1.

Die Fig. 4 zeigt ein weiteres alternatives Ausführungsbeispiel eines Heizkühlmoduls 1. Hier ist ein externer Sammler 16 außerhalb des Heizkühlmoduls 1 angeordnet. Dieser ist benachbart zum Kondensatorbereich 2 angeordnet. Der externe Sammler 16 ist in Strömungsrichtung entlang der Strömungsstrecke 12 dem Expansionsventil 15 vorgelagert und dem Kondensatorbereich 2 nachgelagert. Der Kondensatorbereich 2 wird weiterhin U-förmig von einem Kühlmittel durchströmt, ebenso wird auch der Verdampferbereich 3 von einem Kühlmittel U-förmig durchströmt.

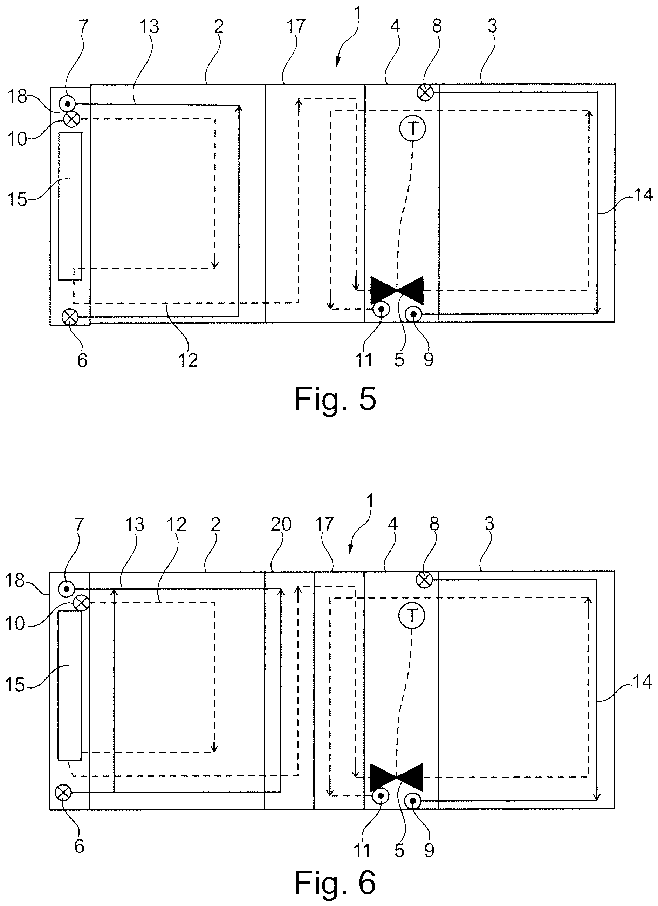

Die Fig. 5 zeigt eine weitere alternative Ausführungsform eines Heizkühlmoduls 1 mit einem Kondensatorbereich 2 und einem Verdampferbereich 3, zwischen welchen ein Fluidverteilungsbereich 4 angeordnet ist. Weiterhin ist in einem Bereich 17 ein innerer Wärmeübertrager realisiert. In diesem inneren Wärmeübertrager 17 kann insbesondere ein Wärmeaustausch zwischen dem aus dem Kondensatorbereich 2 strömenden Kältemittel und dem aus dem Verdampferbereich 3 strömenden Kältemittel erreicht werden. Hierzu wird das Kältemittel in mehreren Schleifen und mit mehreren Umlenkungen durch den Bereich 17, welcher den inneren Wärmeübertrager darstellt, geführt. Weiterhin ist links neben dem Kondensatorbereich ein zweiter Fluidverteilungsbereich 18 vorgesehen, in welchem ein Sammler 15 vorgesehen ist. Der zweite Fluidverteilungsbereich 18 weist insbesondere den dritten Zulauf 10, den ersten Zulauf 6 und den ersten Ablauf 7 auf. Der zweite Zulauf 8, der zweite Ablauf 9 und der dritte Ablauf 11 sind jeweils im Fluidverteilungsbereich 4 angeordnet. Ebenso ist das Expansionsventil 5 in diesem Fluidverteilungsbereich 4 angeordnet. Der Kondensatorbereich 2 wird U-förmig von dem Kältemittel durchströmt, bevor es in den links neben dem Kondensatorbereich 2 angeordneten Sammler 15 einströmt. Schließlich wird das Kältemittel nach dem Austritt aus dem Sammler 15 durch den Kondensatorbereich 2 in den inneren Wärmeübertrager 17 hineingeführt. Nach dem inneren Wärmeübertrager 17 wird der Verdampferbereich 3 U-förmig von dem Kältemittel durchströmt, bevor das Kältemittel schließlich zurück in den inneren Wärmeübertrager 17 geführt wird und von dort zum unten liegenden dritten Fluidablauf 11 geführt wird. Die Durchführung des Kältemittels durch den Kondensatorbereich 2 kann beispielsweise durch Tauchhülsen erreicht werden, welche durch die Struktur des Heizkühlmoduls 1 geführt werden.

Die Fig. 6 zeigt eine Ausgestaltung des Heizkühlmoduls 1, wobei zwischen dem inneren Wärmeübertrager 17 und dem Kondensatorbereich 2 ein Unterkühlbereich 20 angeordnet ist. Links neben dem Kondensatorbereich 2 ist ebenfalls ein zweiter Fluidverteilungsbereich 18 mit einem Sammler 15 angeordnet, wie er bereits in Fig. 5 gezeigt ist. Zusätzlich zum inneren Wärmeübertrager 17 wird nun auch der Unterkühlbereich 20 von dem Kältemittel und von dem Kühlmittel des Kondensatorbereichs 2 durchströmt. Auf diese Weise wird eine weitere Abkühlung des Kältemittels im Unterkühler 20 erreicht, wodurch die Effizienz des Heizkühlmoduls 1 insgesamt erhöht werden kann. Der Fluidverteilungsbereich 4 rechts neben dem inneren Wärmeübertrager 17 und der Verdampferbereich 3 entsprechen weiterhin dem Ausführungsbeispiel der Fig. 5.

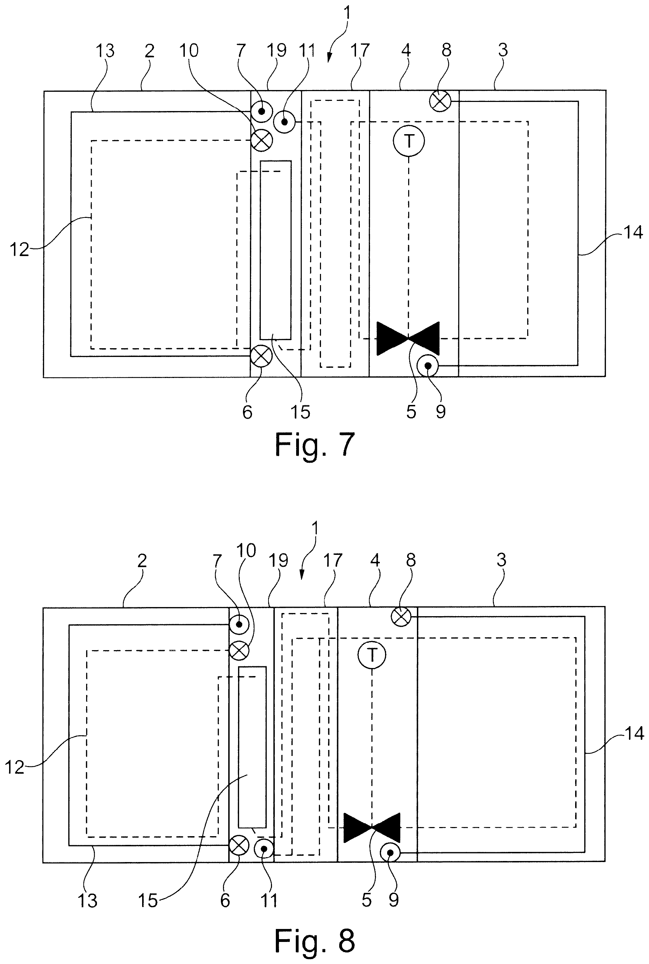

Die Fig. 7 zeigt eine alternative Anordnung eines Verdampferbereichs 3 am rechten Endbereich mit einem daneben angeordneten Fluidverteilungsbereich 4, einem daneben angeordneten inneren Wärmeübertrager 17 sowie einem weiteren Fluidverteilungsbereich 19, welcher einen Sammler 15 aufweist. Links neben dem Fluidverteilungsbereich 19 ist der Kondensatorbereich 2 angeordnet. Das Kältemittel strömt innerhalb des Fluidverteilungsbereichs 19 ein und durchströmt den Kondensatorbereich 2 U-förmig, bevor es in den Sammler 15 im Fluidverteilungsbereich 19 geführt wird. Vom Sammler 15 strömt das Kältemittel letztlich in den inneren Wärmeübertrager 17, bevor es durch das Expansionsventil im Fluidverteilungsbereich 4 strömt und in den Verdampferbereich 3 einströmt. Das aus dem Verdampferbereich 3 ausströmende Kältemittel wird schließlich im Wärmeübertrager 17 wieder in Wärmeaustausch mit dem aus dem Sammler 15 strömenden Kältemittel gebracht. Das Kältemittel strömt dann über den Fluidverteilungsbereich 19 im oberen Bereich über den dritten Fluidablauf 11 aus dem Heizkühlmodul 1 aus. Der Kondensatorbereich 2 sowie der Verdampferbereich 3 werden jeweils U-förmig ohne weitere Umlenkung von dem Kühlmittel durchströmt.

Das Ausführungsbeispiel der Fig. 8 entspricht dem der Fig. 7 weitestgehend, mit dem Unterschied, dass das aus dem Verdampferbereich 3 strömende Kältemittel im inneren Wärmeübertrager 17 in zwei parallelen Strömungswegen von oben nach unten geführt wird und schließlich über einen unten liegenden dritten Fluidablauf 11 aus dem Heizkühlmodul 1 ausgeführt wird.

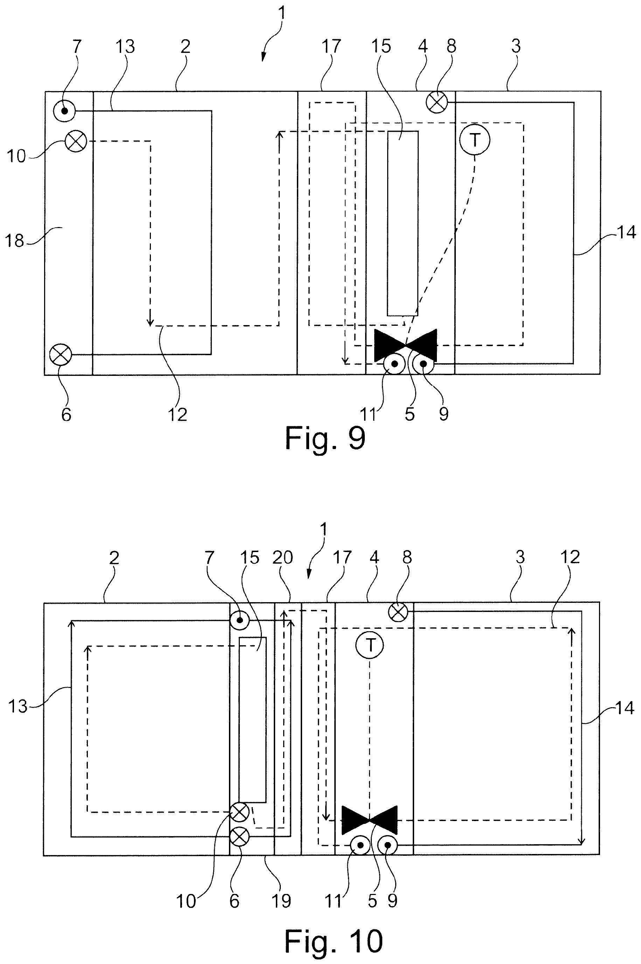

Im Ausführungsbeispiel der Fig. 9 ist der Sammler 15 im Fluidverteilungsbereich 4 angeordnet. Über diesen Fluidverteilungsbereich 4 wird das Kühlmittel für den Verdampferbereich 3 über den zweiten Fluidzulauf 8 und den zweiten Fluidablauf 9 eingeführt. Links neben dem Fluidverteilungsbereich 4 ist ein innerer Wärmeübertrager 17 angeordnet, in welchem das Kältemittel des Kondensatorbereichs 2 mit dem Kältemittel des Verdampferbereichs 3 in Wärmeaustausch gebracht wird. Links neben dem Kondensatorbereich 2 ist ein Fluidverteilungsbereich 18 angeordnet, welcher den dritten Zulauf 10, den ersten Zulauf 6 und den ersten Ablauf 7 aufweist. Der dritte Zulauf 10 ist am oberen Endbereich angeordnet und das Kältemittel durchströmt den Kondensatorbereich U-förmig von oben nach unten und schließlich wieder zurück nach oben und tritt am oberen Bereich durch den inneren Wärmeübertrager 17 hindurch in den Sammler 15 über, welcher im Fluidverteilungsbereich 4 angeordnet ist. Von dort strömt das Kältemittel im unteren Bereich zurück in den inneren Wärmeübertrager 17, wo es schleifenförmig umgelenkt wird, und nachdem es einen oberen Bereich des inneren Wärmeübertragers 17 durchströmt hat in den unteren Bereich zurück in den Fluidverteilungsbereich 4 und dort in das Expansionsventil 5 gelenkt wird. Das Kältemittel strömt dann U-förmig von unten nach oben durch den Verdampferbereich 3 und zurück in den inneren Wärmeübertrager 27 und dort von oben nach unten hin zum dritten Fluidauslass 11, welcher am unteren Bereich im Fluidverteilungsbereich 4 angeordnet ist.

Die Fig. 10 zeigt eine Anordnung, wobei links neben dem Fluidverteilungsbereich 4 ein innerer Wärmeübertrager 17, ein Unterkühler 20 und ein zweiter Fluidverteilungsbereich 19 angeordnet sind. Im linken Fluidverteilungsbereich 19 ist weiterhin ein Sammler 15 angeordnet. Das Kältemittel strömt im Beispiel der Fig. 10 durch den dritten Fluidzulauf im zweiten Fluidverteilungsbereich 19 im unteren Bereich ein und durchströmt den Kondensatorbereich 2 U-förmig, bevor es im oberen Bereich in den Sammler 15 eintritt. Aus dem Sammler 15 strömt das Kältemittel am unteren Ende des Sammlers 15 aus und wird schließlich im Unterkühler 20 im Gleichstrom mit dem Kühlmittel des Kondensatorbereichs 2 geführt, bevor es im oberen Bereich in den inneren Wärmeübertrager 17 überführt wird und nach einer Umlenkung im unteren Bereich schließlich durch den Fluidverteilungsbereich 4 und das Expansionsventil 5 in den Verdampferbereich 3 einströmt. Vom Verdampferbereich 3, wo es U-förmig strömt, wird es letztlich durch den Fluidverteilungsbereich 4 in den inneren Wärmeübertrager 17 zurückgeleitet und dort von oben nach unten hin zum unten liegenden dritten Fluidabfluss 11 im Fluidverteilungsbereich 4 geführt. Auf diese Weise ist im Unterkühlbereich 20 ein weiterer Wärmeübertrag zwischen dem Kältemittel und dem Kühlmittel des Kondensatorbereichs 2 gewährleistet und im inneren Wärmeübertrager 17 ein Wärmeaustausch zwischen dem Kältemittel aus dem Kondensatorbereich 2 und dem Verdampferbereich 3.

Das Kühlmittel des Verdampferbereichs 3 wird weiterhin U-förmig durch diesen geführt. Das Kühlmittel für den Kondensatorbereich 2 wird an einem unten liegenden ersten Fluidzulauf 6 in den zweiten Fluidverteilungsbereich 19 eingeführt und dort in zwei Richtungen nach links und nach rechts sowohl in den inneren Wärmeübertrager 20 als auch in den Kondensatorbereich 2 geführt. Dort strömt es jeweils nach oben und strömt schließlich über den am oberen Endbereich liegenden ersten Fluidablauf 7 aus dem Heizkühlmodul 1 aus.

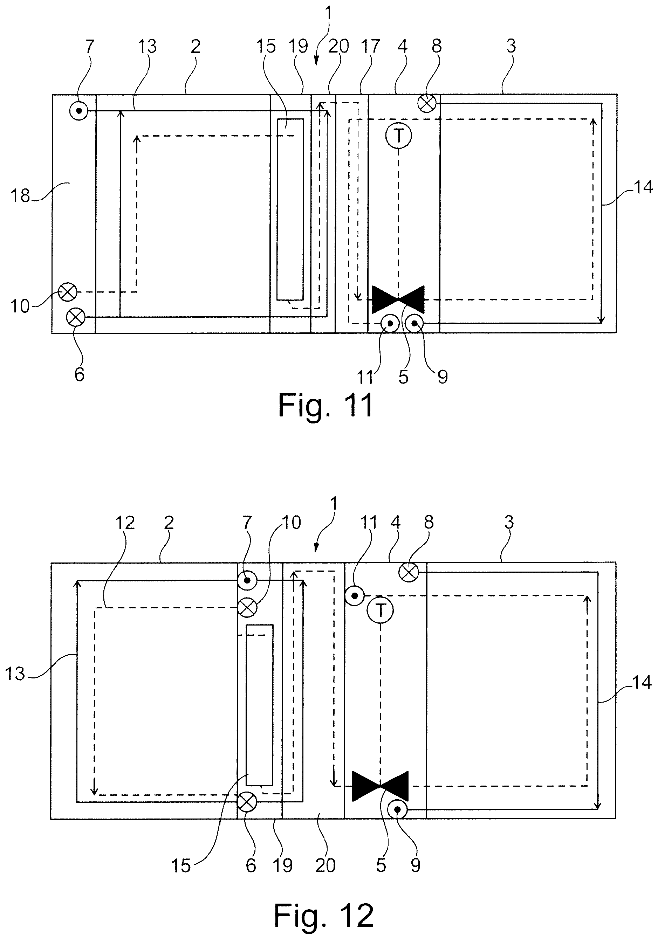

Die Fig. 11 zeigt einen Aufbau eines Heizkühlmoduls 1, wie er bereits in der Fig. 10 gezeigt wurde. Zusätzlich ist nun am linken Endbereich des Kondensatorbereichs 2 ein weiterer Fluidverteilungsbereich 18 angeordnet. Dieser trägt den ersten Zulauf 6, den ersten Ablauf 7 sowie den dritten Zulauf 10. Die restlichen Zu- und Abläufe 8, 9 und 11 sind im links neben dem Verdampferbereich 2 angeordneten Fluidverteilungsbereich 4 angeordnet. Der dritte Fluidzulauf 10 ist im unteren Bereich angeordnet, wodurch das Kältemittel im unteren Bereich in den Kondensatorbereich 2 übertritt und dort nach oben strömt, bevor es im oberen Bereich in den weiteren Fluidverteilungsbereich 19 und den darin angeordneten Sammler 15 einströmt. Am unteren Ende des Sammlers 15 tritt das Kältemittel aus und wird im Gleichstrom mit dem Kühlmittel des Kondensatorbereichs 2 innerhalb des Unterkühlers 20 nach oben geführt. Dort strömt es nach rechts über in den inneren Wärmeübertrager 17, wo es wieder mit dem Kältemittel, welches den Verdampferbereich 3 bereits durchströmt hat, in einen weiteren Wärmeaustausch gebracht wird. Das Kältemittel strömt letztlich über den dritten Fluidablauf 11 am unteren Endbereich des Heizkühlmoduls 1 aus. Durch die Anordnung des dritten Zulaufs 10 im linken Fluidverteilungsbereich 18 kann eine abgeänderte Fluidführung innerhalb des Kondensatorbereichs 2 realisiert werden. Das Kühlmittel des Kondensatorbereichs 2 wird ebenfalls über den links liegenden Fluidverteilungsbereich 18 im unteren Bereich zugeführt und strömt dort sowohl im Kondensatorbereich 2 nach oben als auch im Unterkühlbereich 20 nach oben. Das Kühlmittel strömt letztlich über eine gemeinsame Strömungsstrecke durch den ersten Fluidablauf 7 aus dem Heizkühlmodul 1 aus.

In der Fig. 12 ist eine Anordnung dargestellt, welche von links aus einen Kondensatorbereich 2, einen daneben liegenden Fluidverteilungsbereich 19, einen daneben liegenden Unterkühler 20, einen weiteren Fluidverteilungsbereich 4 und einen Verdampferbereich 3 aufweist. Im linken Fluidverteilungsbereich 19 ist weiterhin ein Sammler 15 angeordnet, welcher von dem Kältemittel von oben nach unten durchströmt wird. Im Unterkühlbereich 20 wird das aus dem Sammler 15 strömende Kältemittel weiterhin mit dem Kühlmittel des Kondensatorbereichs 2 in Wärmeaustausch gebracht. Das Kältemittel strömt hierzu am oberen Ende durch den dritten Zulauf 10 im Fluidverteilungsbereich 19 in das Heizkühlmodul 1 und wird dort schleifenförmig durch den Kondensatorbereich 2 geführt, so dass es am oberen Bereich des Sammlers 15 eintreten kann. Das Kältemittel wird schließlich ebenfalls U-förmig durch den Verdampferbereich 3 geführt und tritt an einem oben liegenden dritten Fluidablauf 11 aus dem Heizkühlmodul 1 aus.

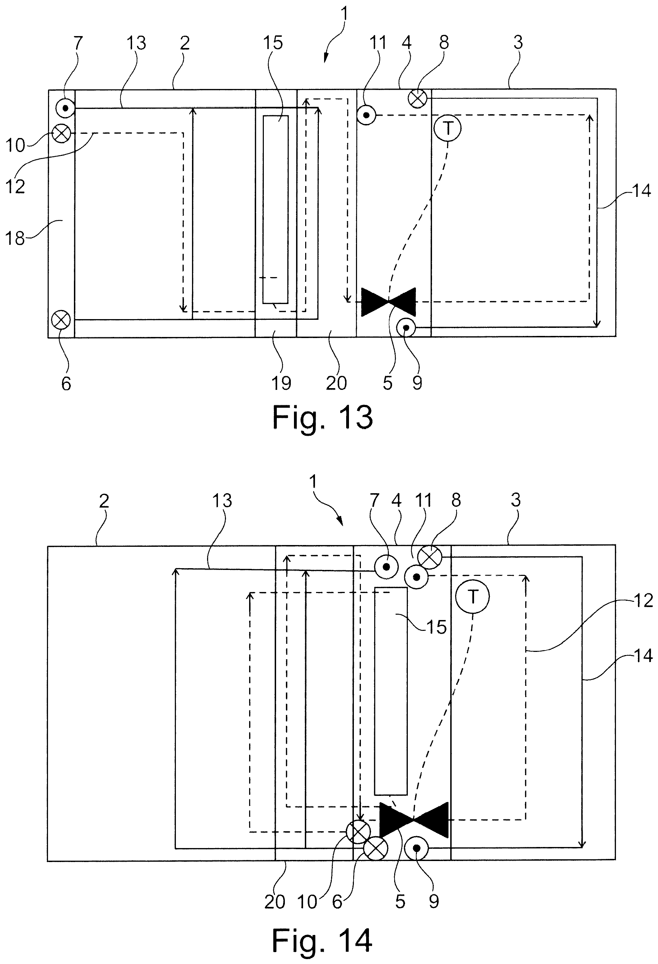

Die Fig. 13 zeigt eine Anordnung entsprechend der Fig. 12 mit dem Unterschied, dass am linken Endbereich des Kondensatorbereichs 2 ein weiterer Fluidverteilungsbereich 18 angeordnet ist. Dieser trägt den dritten Fluidzulauf 10, den ersten Fluidzulauf 6 und den ersten Fluidablauf 7. Analog der Fig. 11 wird durch diesen zusätzlichen Fluidverteilungsbereich 18 eine abgeänderte Fluidführung, insbesondere für das Kältemittel entlang der Strömungsstrecke 12 innerhalb des Heizkühlmoduls 1 ermöglicht. Das Kältemittel wird im Kondensatorbereich 2 nicht schleifenförmig geführt, sondern tritt am oberen Bereich des Heizkühlmoduls 1 ein und strömt innerhalb des Kondensatorbereichs 2 von oben nach unten und von dort in den Sammler 15. Da auch in Fig. 13 ein Unterkühlbereich 20 vorgesehen ist, wird das Kühlmittel des Kondensatorbereichs 2 sowohl innerhalb des Kondensatorbereichs 2 von unten nach oben geführt als auch im Unterkühlbereich 20. Beide Fluidströme werden dann durch einen gemeinsamen Strömungsweg aus dem ersten Fluidablauf 7 aus dem Heizkühlmodul 1 abgeführt.

Die nachfolgenden Fig. 14, 15 und 16 weisen jeweils links liegend einen Kondensatorbereich 2 auf, an welchem sich nach rechts ein Unterkühlbereich 20 anschließt und weiterhin nach rechts ein Fluidverteilungsbereich 4, welcher einen Sammler 15 aufweist. Rechts daneben ist ein Verdampferbereich 3 angeordnet. Die Fluidzuläufe und -abläufe 6 bis 11 sind im Beispiel der Fig. 14 vollständig innerhalb des Fluidverteilungsbereichs 4 angeordnet. Innerhalb des Unterkühlers 20 wird ein Wärmeaustausch zwischen dem Kältemittel und dem Kühlmittel des Kondensatorbereichs 2 realisiert. Das Kältemittel strömt insbesondere am unteren Endbereich des Fluidverteilungsbereichs 4 ein und strömt dort durch den Unterkühler 20 in den Kondensatorbereich 2, von dort strömt das Kältemittel im oberen Bereich zurück bis in den Fluidverteilungsbereich 4 und in den Sammler 15. Vom unteren Endbereich des Sammlers 15 strömt das Kältemittel durch das Expansionsventil 5 im unteren Bereich des Heizkühlmoduls 1 über in den Verdampferbereich 3, wo es nach oben strömt und schließlich an einem oben liegenden dritten Fluidablauf 11 aus dem Heizkühlmodul 1 ausströmt. Die Kühlmittel sowohl für den Kondensatorbereich 2 als auch für den Verdampferbereich 3 werden jeweils in einer einfachen U-förmigen Form entlang der Strömungsstrecken 13 beziehungsweise 14 durch das Heizkühlmodul 1 geführt.

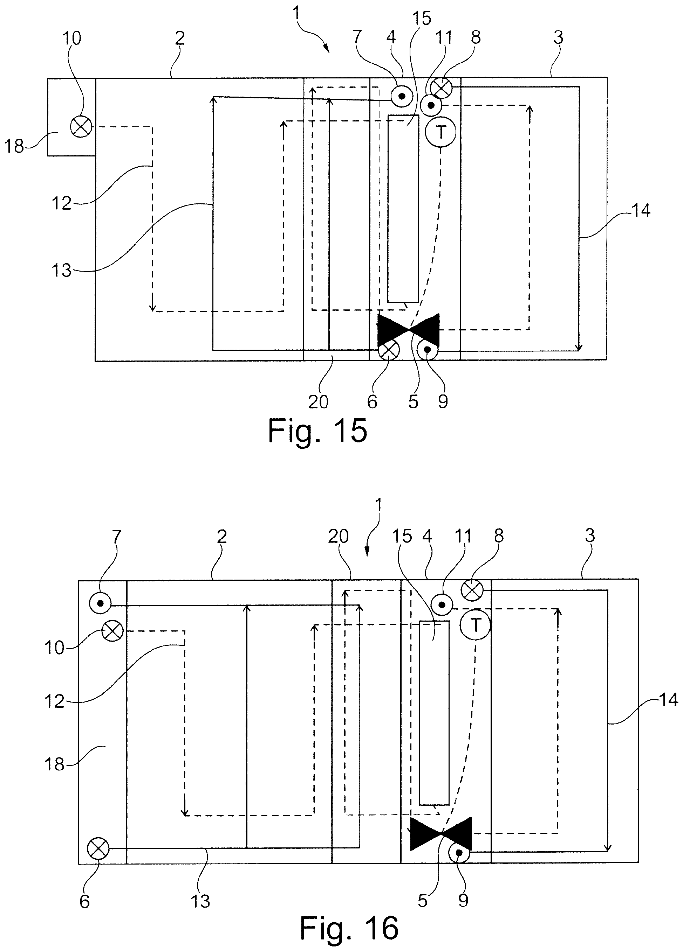

Die Fig. 15 zeigt einen Aufbau analog der Fig. 14, wobei zusätzlich am linken Endbereich ein zumindest über einen Teilbereich der Höhe des Heizkühlmoduls 1 verlaufender Fluidverteilungsbereich 18 vorgesehen ist. In diesem ist insbesondere der dritte Fluidzulauf 10 vorgesehen. Die weiteren Fluidzuläufe und -abläufe 6 bis 9 und 11 sind im rechts liegenden Fluidverteilungsbereich 4 angeordnet. Durch den dritten Zulauf 10 im Fluidverteilungsbereich 18 ergibt sich eine abweichende Führung des Kältemittels innerhalb des Heizkühlmoduls 1. Das Kältemittel strömt im oberen Bereich in den Kondensatorbereich 2 über und dort nach unten und U-förmig wieder nach oben, bevor es durch den Unterkühlbereich 20 in den oberen Bereich des Sammlers 15 strömt. Von dort strömt das Kältemittel durch den unteren Bereich des Heizkühlmoduls 1 zurück in den Unterkühlbereich 20 und tritt dort in einen Wärmeaustausch mit dem Kühlmittel des Kondensatorbereichs 2. Schließlich strömt das Kältemittel nach oben und im oberen Bereich nach rechts in den Fluidverteilungsbereich 4, wo es nach unten strömt und durch das Expansionsventil 5 in den Verdampferbereich 3 strömt. Dort strömt es an den oberen Endbereich des Heizkühlmoduls 1 zurück und schließlich über den dritten Fluidablauf 11 im Fluidverteilungsbereich 4 aus dem Heizkühlmodul 1 aus.

Die Fig. 16 zeigt einen ähnlichen Aufbau, wobei links vom Kondensatorbereich 2 nun ein Fluidverteilungsbereich 18 über die volle Höhe des Heizkühlmoduls 1 angeordnet ist. Im Fluidverteilungsbereich 18 sind insbesondere der erste Fluidzulauf 6, der dritte Fluidzulauf 10 und der erste Fluidablauf 7 angeordnet. Die Durchströmung des Heizkühlmoduls 1 findet größtenteils analog zu dem in Fig. 15 gezeigten Ausführungsbeispiel statt. Lediglich die Führung des Kühlmittels durch den Kondensatorbereich 2 entlang der Strömungsstrecke 13 weicht ab, indem das Kühlmittel lediglich U-förmig aus dem links liegenden Fluidverteilungsbereich 18 durch den unteren Bereich des Heizkühlmoduls 1 in den Kondensatorbereich 2 und in den Unterkühlbereich 20 einströmt und dort nach oben strömt und mit einer gemeinsamen Fluidführung aus dem ersten Fluidablauf 7 im oberen Bereich ausströmt.

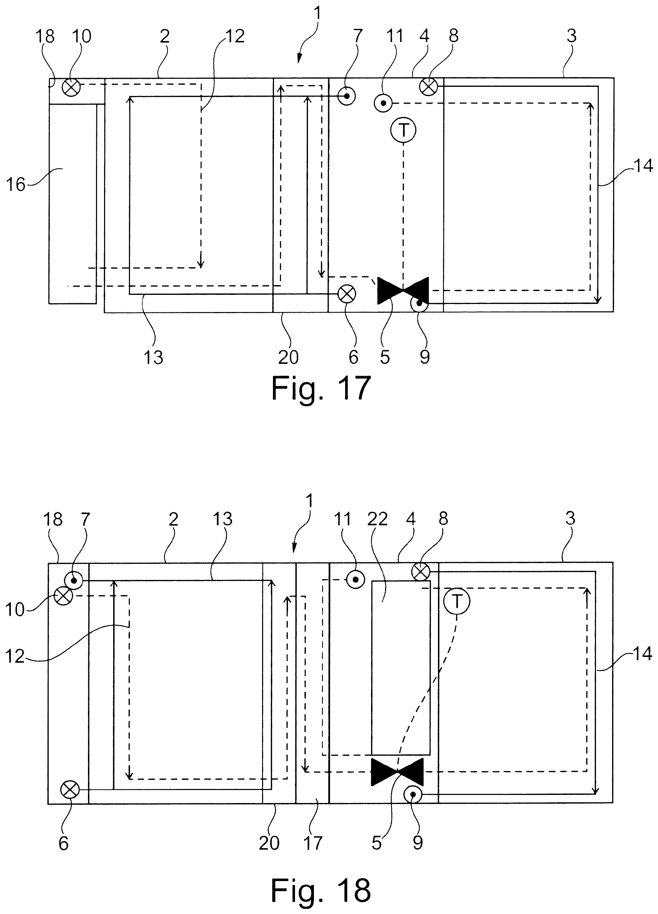

Die Fig. 17 zeigt eine Ausführungsform, wobei links neben dem Kondensatorbereich 2 ein externer Sammler 16 vorgesehen ist und weiterhin ein zumindest sich über einen Teilbereich in der Höhe erstreckender Fluidverteilungsbereich 18, welcher am oberen Ende des Heizkühlmoduls 1 angeordnet ist.

In der Fig. 17 wird das Kältemittel durch den oben liegenden dritten Fluidzufluss 10 im links liegenden Fluidverteilungsbereich 18 in das Heizkühlmodul 1 eingeströmt und strömt dort im oberen Bereich in den Kondensatorbereich 2 über. Dort strömt das Kältemittel nach unten und nach links in den externen Sammler 16 zurück. Dort durchströmt das Kältemittel den Sammler 16 und strömt schließlich am unteren Endbereich des Sammlers 16 durch den Kondensatorbereich 2 in den Unterkühlbereich 20, wo es nach oben strömt und U-förmig umgelenkt wird und schließlich wieder nach unten strömt und dort mit dem Kühlmittel des Kondensatorbereichs 2 in Wärmeaustausch tritt. Das Kältemittel wird am unteren Endbereich in den rechts liegenden Fluidverteilungsbereich 4 übergeleitet, bevor es durch das Expansionsventil 5 in den Verdampferbereich 3 strömt und dort U-förmig nach oben und schließlich nach links zurück in den Fluidverteilungsbereich 4 strömt. Das Kältemittel strömt dann über den dritten Fluidablauf 11 am oberen Ende des Heizkühlmoduls 1 aus. Das Kühlmittel für den Kondensatorbereich 2 strömt im rechts liegenden Fluidverteilungsbereich 4 im unteren Bereich ein und wird dort in den Unterkühlbereich 20 und den Kondensatorbereich 2 verteilt, wo es nach oben strömt und über eine gemeinsame Strömungsstrecke nach rechts zurück in den Fluidverteilungsbereich 4 strömt, wo es am oberen ersten Fluidablauf 7 ausströmt.

Die Fig. 18 zeigt ein weiteres Ausführungsbeispiel, wobei von links ein Fluidverteilungsbereich 18 angeordnet ist, welcher den ersten Fluidzulauf 6, den ersten Fluidablauf 7 und den dritten Fluidzulauf 10 aufweist, rechts daneben ist ein Kondensatorbereich 2 angeordnet, rechts daneben ein Unterkühlbereich 20, rechts daneben ein innerer Wärmeübertrager 17, rechts daneben ein Fluidverteilungsbereich 4 und rechts daneben schließlich ein Verdampferbereich 3. Das Kältemittel wird im oberen Bereich des links liegenden Fluidverteilungsbereichs 18 in das Heizkühlmodul 1 eingeströmt und strömt schließlich nach rechts über in den Kondensatorbereich 2, wo es nach unten strömt und im unteren Endbereich in die Unterkühlstrecke 20 überströmt. Dort wird das Kältemittel nach oben umgeleitet und tritt in Wärmeaustausch mit dem Kühlmittel des Kondensatorbereichs 2. Im oberen Bereich wird das Kältemittel in den rechts liegenden inneren Wärmeübertrager 17 überführt, wo es nach unten strömt und schließlich nach rechts durch den Fluidverteilungsbereich 4 und das darin liegende Expansionsventil 5 in den rechts liegenden Verdampferbereich 3 strömt. Dort wird es U-förmig nach oben geführt und schließlich im oberen Bereich nach links zurück, wo es in den Sammler 22 innerhalb des Fluidverteilungsbereichs 4 einströmt. Am unteren Endbereich des Sammlers 22 strömt das Kältemittel schließlich aus und zurück in den inneren Wärmeübertrager 17, wo es schließlich nach oben strömt und nach rechts zurück in den Fluidverteilungsbereich 4 strömt und aus dem dritten Fluidablauf 11 im oberen Bereich des Heizkühlmoduls 1 ausströmt.

Das Kühlmittel des Kondensatorbereichs 2 wird im unteren Bereich des linken Fluidverteilungsbereichs 18 eingeströmt und strömt in zwei parallel zueinander verlaufenden Strömungswegen sowohl im Unterkühlbereich 20 als auch im Kondensatorbereich 2 nach oben und wird dort über einen gemeinsamen Strömungsweg zu dem oben liegenden ersten Fluidablauf 7 geführt.

Der in der Fig. 18 gezeigte Sammler 22 ist ein Niederdrucksammler, welcher mit einem Kältemittel niedrigen Drucks durchströmt wird. Hierzu kann insbesondere ein Druckverminderungselement vorgesehen werden, welches beispielsweise durch eine Querschnittsverjüngung des Strömungsweges dargestellt sein kann.

Die Fig. 1 bis 18 zeigen jeweils nur eine schematische Durchströmung des Heizkühlmoduls 1 beziehungsweise 1a. Insbesondere können mehrere Umlenkungen vorgesehen sein, welche zu einer verbesserten Zirkulation des Kältemittels beziehungsweise des Kühlmittels innerhalb des Heizkühlmoduls 1 beziehungsweise 1a führen. Auch können die Strömungsrichtungen des Kühlmittels oder des Kältemittels in alternativen Ausführungsformen umgedreht werden, so dass Bereiche, die im Gleichstrom zueinander strömen, dadurch in einem Gegenstrom zueinander durchströmt werden, wodurch der Wärmeübertrag verbessert werden kann.

Die Fig. 1 bis 18 zeigen insbesondere nur eine schematische Darstellung, wodurch jedoch der Lösungsbereich hinsichtlich der Materialwahl, den Abmessungen und der Anordnung der Elemente zueinander nicht eingeschränkt wird. Insbesondere werden die unterschiedlichen Möglichkeiten der Aneinanderreihung der einzelnen Bereiche, wie den Fluidverteilungsbereichen, dem Kondensatorbereich, dem inneren Wärmeübertrager, dem Unterkühlbereich, dem Sammler und dem Verdampferbereich durch die Ausführungsformen der Fig. 1 bis 18 nicht beschränkt. Die Fig. 1 bis 18 zeigen lediglich eine nicht abschließende Auswahl der möglichen Anordnungen.

## Patentansprüche

1. Heizkühlmodul (1, 1a) in Stapelscheibenbauweise, aufgebaut durch eine Aufeinanderstapelung mehrerer einzelner Scheibenelemente, mit einem Kondensatorbereich (2), mit einem Verdampferbereich (3) und mit zumindest einem Fluidverteilungsbereich (4, 18, 19), wobei der Kondensatorbereich (2) eine erste Strömungsstrecke (12) aufweist, welche von einem Kältemittel durchströmbar ist, und eine zweite Strömungsstrecke (13) aufweist, welche von einem Kühlmittel durchströmbar ist, und der Verdampferbereich (3) eine dritte Strömungsstrecke (12) aufweist, welche von einem Kältemittel durchströmbar ist, und eine vierte Strömungsstrecke (14) aufweist, welche von einem Kühlmittel durchströmbar ist, wobei die Strömungsstrecken (12, 13, 14) durch eine Mehrzahl von Strömungskanälen gebildet sind, welche zwischen den einzelnen Scheibenelementen, welche das Heizkühlmodul (1, 1a) bilden, ausgebildet sind, wobei ein erster Fluidzulauf (6, 6a) und ein erster Fluidablauf (7, 7a) vorgesehen ist, über welche der Kondensatorbereich (2) mit einem Kühlmittel durchströmbar ist und ein zweiter Zulauf (8, 8a) und ein zweiter Ablauf (9, 9a) vorgesehen ist, über welche der Verdampferbereich (3) mit einem Kühlmittel durchströmbar ist und ein dritter Zulauf (10, 10a) und ein dritter Ablauf (11, 11a) vorgesehen ist, über welche das Heizkühlmodul (1, 1a) mit einem Kältemittel durchströmbar ist, **dadurch gekennzeichnet, dass** der zumindest eine Fluidverteilungsbereich (4) zwischen dem Kondensatorbereich (2) und dem Verdampferbereich (3) angeordnet ist und ein Expansionsventil (5) aufweist, welches von Kältemittel durchströmbar ist, wobei der Verdampferbereich (3), der Kondensatorbereich (2) und der erste Fluidverteilungsbereich (4) in einer Richtung quer zur Stapelrichtung des Heizkühlmoduls (1) nebeneinander angeordnet sind.

2. Heizkühlmodul (1, 1a) nach Anspruch 1, **dadurch gekennzeichnet, dass** ein zweiter Fluidverteilungsbereich (18, 19) vorgesehen ist, welcher auf der vom ersten Fluidverteilungsbereich (4) abgewandten Seite des Verdampferbereichs (3) oder des Kondensatorbereichs (2) angeordnet ist.

3. Heizkühlmodul (1, 1a) nach einem der vorhergehenden Ansprüche, **dadurch gekennzeichnet, dass** die zwischen den Scheibenelementen ausgebildeten Strömungskanäle durch Trennelemente in mehrere Bereiche unterteilt sind, wobei die einzelnen Bereiche jeweils einen Wärmeübertrager (2, 3, 17, 20) zugeordnet sind.

4. Heizkühlmodul (1, 1a) nach Anspruch 3, **dadurch gekennzeichnet, dass** die einzelnen Bereiche (2, 3, 4, 17, 18 ,19 ,20) über Flanschelemente miteinander in Fluidkommunikation stehen.

5. Heizkühlmodul (1, 1a) nach Anspruch 4, **dadurch gekennzeichnet, dass** die Zuläufe (6, 6a, 8, 8a, 10, 10a) und/oder die Abläufe (7, 7a, 9, 9a, 11, 11a) in die Flanschelemente integriert sind.

6. Heizkühlmodul (1) nach einem der vorhergehenden Ansprüche, **dadurch gekennzeichnet, dass** die Zuläufe (6, 8, 10) und/oder die Abläufe (7, 9, 11) jeweils an einem oder mehreren Scheibenelementen oder zwischen zwei benachbarten Scheibenelementen integriert sind und mit zumindest einem Strömungskanal in Fluidkommunikation stehen, wobei die jeweiligen Scheibenelemente benachbart zu den Scheibenelementen angeordnet sind, welche den Scheibenstapel nach oben und unten hin abschließen.

7. Heizkühlmodul (1) nach einem der vorhergehenden Ansprüche, **dadurch gekennzeichnet, dass** alle Zuläufe (6, 8, 10) und Abläufe (7, 9, 11) an einer gemeinsamen Außenfläche des Heizkühlmoduls (1) angeordnet sind.

8. Heizkühlmodul (1) nach einem der vorhergehenden Ansprüche, **dadurch gekennzeichnet, dass** das Heizkühlmodul (1) zusätzlich zu dem Kondensatorbereich (2), dem Verdampferbereich (3) und dem Fluidverteilungsbereich (4, 18, 19) einen Sammler (15, 16, 22) und/oder einen inneren Wärmeübertrager (17) und/oder einen Unterkühler (20) aufweist.

9. Heizkühlmodul (1) nach einem der vorhergehenden Ansprüche, **dadurch gekennzeichnet, dass** ein Filter in eine der Strömungsstrecken (12) des Kältemittels integrierbar ist, wobei der Filter in Strömungsrichtung dem Expansionsventil (5) vorgelagert ist.

10. Heizkühlmodul (1) nach Anspruch 8, **dadurch gekennzeichnet, dass** der Sammler (16) außerhalb des Heizkühlmoduls (1) an oder benachbart zu einer der Außenflächen angeordnet ist, wobei der Sammler (16) mit einer der Strömungsstrecken (12) des Kältemittels in Fluidkommunikation steht.

11. Heizkühlmodul (1) nach einem der vorhergehenden Ansprüche, **dadurch gekennzeichnet, dass** entlang einer der Strömungsstrecken (12) des Kältemittels oder einer der Strömungsstrecken (13, 14) des Kühlmittels eine Druckverminderungsstelle in Form einer Querschnittsverjüngung vorgesehen ist.

12. Heizkühlmodul (1) nach einem der vorhergehenden Ansprüche, **dadurch gekennzeichnet, dass** das Kühlmittel und das Kältemittel im Gleichstrom oder im Gegenstrom zueinander durch die einzelnen Wärmeübertrager (2, 3, 17, 20), welche durch die Bereiche gebildet sind, strömbar sind.

13. Heizkühlmodul (1) nach einem der vorhergehenden Ansprüche, **dadurch gekennzeichnet, dass** zusätzlich zu dem Verdampferbereich (3), dem Kondensatorbereich (2) und dem ersten Fluidverteilungsbereich (4) auch sofern vorhanden ein weiterer Fluidverteilungsbereich (18, 19) und/oder der Unterkühler (20) und/oder der Sammler (15, 16, 22) und/oder der innere Wärmeübertrager (17) in einer Richtung quer zur Stapelrichtung des Heizkühlmoduls (1) nebeneinander angeordnet sind.

## Claims

1. A heating/cooling module (1, 1a) with a stacked disc design, constructed by stacking several individual disc elements on top of each other, with a condenser region (2), with an evaporator region (3), and with at least one fluid distribution region (4, 18, 19), wherein the condenser region (2) has a first flow section (12), through which a refrigerant can flow, and has a second flow section (13), through which a coolant can flow, and the evaporator region (3) has a third flow section (12), through which a refrigerant can flow, and has a fourth flow section (14), through which a coolant can flow, wherein the flow sections (12, 13, 14) are formed by a plurality of flow channels, which are made between the individual disc elements, forming the heating/cooling module (1, 1a), wherein a first fluid inlet (6, 6a) and a first fluid outlet (7, 7a) are provided, via which a coolant can flow through the condenser region (2), and a second inlet (8, 8a) and a second outlet (9, 9a) are provided, via which a coolant can flow through the evaporator region (3), and a third inlet (10, 10a) and a third outlet (11, 11a) are provided, via which a refrigerant can flow through the heating/cooling module (1, 1a), **characterised in that** the at least one fluid distribution region (4) is arranged between the condenser region (2) and the evaporator region (3) and has a thermostatic expansion valve (5) through which refrigerant can flow, wherein the evaporator region (3), the condenser region (2) and the first fluid distribution region (4) are arranged next to one another in a direction transverse to the stack direction of the heating/cooling module (1).

2. The heating/cooling module (1, 1a) according to claim 1, **characterised in that** a second fluid distribution region (18, 19) is provided, which is arranged on the side, facing away from the first fluid distribution region (4), of the evaporator region (3) or the condenser region (2).

3. The heating/cooling module (1, 1a) according to one of the preceding claims, **characterised in that** the flow channels, made between the disc elements, are divided into a number of regions by partition elements, wherein the individual regions are assigned to a respective heat exchanger (2, 3, 17, 20).

4. The heating/cooling module (1, 1a) according to claim 3, **characterised in that** the individual regions (2, 3, 4, 17, 18, 19, 20) are in fluid communication with one another via flange elements.

5. The heating/cooling module (1, 1a) according to claim 4, **characterised in that** the inlets (6, 6a, 8, 8a, 10, 10a) and/or the outlets (7, 7a, 9, 9a, 11, 11a) are integrated into the flange elements.

6. The heating/cooling module (1) according to one of the preceding claims, **characterised in that** the inlets (6, 8, 10) and/or the outlets (7, 9, 11) are each integrated on one or more disc elements or between two adjacent disc elements and are in fluid communication with at least one flow channel, wherein the particular disc elements are arranged adjacent to the disc elements that close the disc stack at the top and bottom.

7. The heating/cooling module (1) according to one of the preceding claims, **characterised in that** all inlets (6, 8, 10) and outlets (7, 9, 11) are arranged on a common outer surface of the heating/cooling module (1).

8. The heating/cooling module (1) according to one of the preceding claims, **characterised in that** the heating/cooling module (1) has a collector (15, 16, 22) and/or an internal heat exchanger (17) and/or a sub-cooler (20), in addition to the condenser region (2), the evaporator region (3) and the fluid distribution region (4, 18, 19).

9. The heating/cooling module (1) according to one of the preceding claims, **characterised in that** a filter can be integrated into one of the refrigerant flow sections (12), wherein the filter is mounted in the flow direction upstream of the expansion valve (5).

10. The heating/cooling module (1) according to claim 8, **characterised in that** a collector (16) is arranged outside the heating/cooling module (1) on or adjacent to one of the outer surfaces, wherein the collector (16) is in fluid communication with one of the refrigerant flow sections (12).

11. The heating/cooling module (1) according to one of the preceding claims, **characterised in that** a pressure-reducing section in the form of a cross-sectional narrowing is provided along one of the refrigerant flow sections (12) or one of the coolant flow sections (13, 14).

12. The heating/cooling module (1) according to one of the preceding claims, **characterised in that** the coolant and the refrigerant can be flowed in a cocurrent or counter-current to one another through the individual heat exchangers (2, 3, 17, 20) which are formed by the regions.

13. The heating/cooling module (1) according to one of the preceding claims, **characterised in that** in addition to the evaporator region (3), the condenser region (2) and the first fluid distribution region (4), if present, a further fluid distribution region (18, 19), and/or the sub-cooler (20), and/or the collector (15, 16, 22), and/or the internal heat exchanger (17) are also arranged next to one another in a direction transverse to the stack direction of the heating/cooling module (1).

## Revendications

1. Module de chauffage et de refroidissement (1, 1a), de conception à plaques empilées, réalisé par un empilage les uns sur les autres de plusieurs éléments de plaques individuels, ledit module ayant une zone de condenseur (2), ayant une zone d'évaporateur (3) et ayant au moins une zone de distribution des fluides (4, 18, 19), où la zone de condenseur (2) présente une première trajectoire d'écoulement (12) qui peut être traversée par un fluide frigorigène, et présente une deuxième trajectoire d'écoulement (13) qui peut être traversée par un liquide de refroidissement, et la zone d'évaporateur (3) présente une troisième trajectoire d'écoulement (12) qui peut être traversée par un fluide frigorigène, et présente une quatrième trajectoire d'écoulement (14) qui peut être traversée par un liquide de refroidissement, où les trajectoires d'écoulement (12, 13, 14) sont formées par une pluralité de canaux d'écoulement qui sont constitués entre les différents éléments de plaques qui forment le module de chauffage et de refroidissement (1, 1a), où il est prévu une première arrivée de fluide (6, 6a) et une première évacuation de fluide (7, 7a), par lesquelles la zone de condenseur (2) peut être traversée par un liquide de refroidissement, et il est prévu une deuxième arrivée (8, 8a) et une deuxième évacuation (9, 9a) par lesquelles la zone d'évaporateur (3) peut être traversée par un liquide de refroidissement, et il est prévu une troisième arrivée (10, 10a) et une troisième évacuation (11, 11a) par lesquelles le module de chauffage et de refroidissement (1, 1a) peut être traversé par un fluide frigorigène, **caractérisé en ce que** l'au moins une zone de distribution des fluides (4) est disposée entre la zone de condenseur (2) et la zone d'évaporateur (3) et présente un détendeur (5) qui peut être traversé par le fluide frigorigène, où la zone d'évaporateur (3), la zone de condenseur (2) et la première zone de distribution des fluides (4) sont disposées les unes à côté des autres dans une direction transversale par rapport à la direction de la pile du module de chauffage et de refroidissement (1).

2. Module de chauffage et de refroidissement (1, 1a) selon la revendication 1, **caractérisé en ce qu'**il est prévu une deuxième zone de distribution des fluides (18, 19), zone qui est disposée sur le côté de la zone d'évaporateur (3) ou de la zone de condenseur (2), ledit côté étant placé à l'opposé de la première zone de distribution des fluides (4).

3. Module de chauffage et de refroidissement (1, 1a) selon l'une des revendications précédentes, **caractérisé en ce que** les canaux d'écoulement configurés entre les éléments de plaques sont subdivisés en plusieurs zones par des éléments séparateurs, où les différentes zones sont affectées à chaque fois à un échangeur de chaleur (2, 3, 17, 20).

4. Module de chauffage et de refroidissement (1, 1a) selon la revendication 3, **caractérisé en ce que** les différentes zones (2, 3, 4, 17, 18, 19, 20) sont en communication fluidique les unes avec les autres par des éléments à bride.

5. Module de chauffage et de refroidissement (1, 1a) selon la revendication 4, **caractérisé en ce que** les arrivées (6, 6a, 8, 8a, 10, 10a) et/ou les évacuations (7, 7a, 9, 9a, 11, 11a) sont intégrées dans les éléments à bride.

6. Module de chauffage et de refroidissement (1) selon l'une quelconque des revendications précédentes, **caractérisé en ce que** les arrivées (6, 8, 10) et/ou les évacuations (7, 9, 11) sont intégrées à chaque fois à un ou à plusieurs éléments de plaques ou bien intégrées entre deux éléments de plaques adjacents et sont en communication fluidique avec au moins un canal d'écoulement, où les éléments de plaques respectifs sont disposés de façon adjacente aux éléments de plaques qui ferment la pile de plaques vers le haut et vers le bas.

7. Module de chauffage et de refroidissement (1) selon l'une quelconque des revendications précédentes, **caractérisé en ce que** toutes les arrivées (6, 8, 10) et évacuations (7, 9, 11) sont disposées sur une surface extérieure commune du module de chauffage et de refroidissement (1).

8. Module de chauffage et de refroidissement (1) selon l'une quelconque des revendications précédentes, **caractérisé en ce que** le module de chauffage et de refroidissement (1), en plus de la zone de condenseur (2), de la zone de ventilateur (3) et de la zone de distribution des fluides (4, 18, 19), présente un collecteur (15, 16, 22) et/ou un échangeur de chaleur intérieur (17) et/ou un surrefroidisseur (20).

9. Module de chauffage et de refroidissement (1) selon l'une quelconque des revendications précédentes, **caractérisé en ce qu'**un filtre peut être intégré dans l'une des trajectoires d'écoulement (12) du fluide frigorigène, où le filtre est placé, dans la direction d'écoulement, en amont du détendeur (5).

10. Module de chauffage et de refroidissement (1) selon la revendication 8, **caractérisé en ce que** le collecteur (16) est disposé à l'extérieur du module de chauffage et de refroidissement (1), en étant placé sur l'une des surfaces extérieures ou de façon adjacente à l'une de celles-ci, où le collecteur (16) est en communication fluidique avec l'une des trajectoires d'écoulement (12) du fluide frigorigène.

11. Module de chauffage et de refroidissement (1) selon l'une quelconque des revendications précédentes, **caractérisé en ce qu'**il est prévu, le long de l'une des trajectoires d'écoulement (12) du fluide frigorigène ou de l'une des trajectoires d'écoulement (13, 14) du liquide de refroidissement, un point de réduction de la pression, se présentant sous la forme d'une diminution de la section.

12. Module de chauffage et de refroidissement (1) selon l'une quelconque des revendications précédentes, **caractérisé en ce que** le liquide de refroidissement et le fluide frigorigène peuvent s'écouler dans le même sens ou en sens opposé l'un par rapport à l'autre, en circulant à travers les différents échangeurs de chaleur (2, 3, 17, 20) qui sont formés par les zones.

13. Module de chauffage et de refroidissement (1) selon l'une quelconque des revendications précédentes, **caractérisé en ce que,** en plus de la zone d'évaporateur (3), de la zone de condenseur (2) et de la première zone de distribution des fluides (4), une autre zone de distribution des fluides (18, 19) et/ou le surrefroidisseur (20) et/ou le collecteur (15, 16, 22) et/ou l'échangeur de chaleur intérieur (17), dans la mesure où ils sont également disponibles, sont disposés les uns à côté des autres dans une direction transversale par rapport à la direction de la pile du module de chauffage et de refroidissement (1).
